# EUROPÄISCHE PATENTSCHRIFT

(11) **EP 3 394 503 B1**
(45) Veröffentlichungstag und Bekanntmachung des Hinweises auf die Patenterteilung: **01.05.2024**
(21) Anmeldenummer: 16820155.6
(22) Anmeldetag: 16.12.2016
(51) Int. Cl.: F21S 41/176, F21S 45/70, F21S 41/32

(54) **SCHEINWERFER FÜR FAHRZEUGE MIT ZUMINDEST EINEM LASER-LICHTMODUL**
HEADLAMP FOR VEHICLES HAVING AT LEAST ONE LASER LIGHT MODULE
PHARE POUR VÉHICULES DOTÉ D'AU MOINS UN MODULE DE LUMIÈRE LASER

(30) Priorität: 22.12.2015 AT 510942015
(43) Veröffentlichungstag der Anmeldung: 31.10.2018
(73) Patentinhaber: ZKW Group GmbH, 3250 Wieselburg (AT)
(72) Erfinder: DANNER, Markus, 2252 Ollersdorf (AT); RIESENHUBER, Michael, 3254 Bergland (AT); REISINGER, Bettina, 3300 Amstetten (AT); MAYER, Peter, 3371 Neumarkt an der Ybbs (AT)
(74) Vertreter: Patentanwaltskanzlei Matschnig & Forsthuber OG
(86) Internationale Anmeldenummer: PCT/AT2016/060131
(87) Internationale Veröffentlichungsnummer: WO 2017/106893

(56) Entgegenhaltungen:
- EP-A1- 3 037 716
- DE-A1-102012 220 472
- DE-A1-102012 220 481
- DE-A1-102013 200 521

## Beschreibung

Die Erfindung bezieht sich auf einen Scheinwerfer für Fahrzeuge mit zumindest einem Laser-Lichtmodul, welches eine Laserlichtquelle und ein dieser im Strahlengang nachgeordnetes Phosphorelement sowie eine Vorsatzoptik aufweist.

Bei derartigen Scheinwerfern wird das z.B. blaue Licht eines Laserstrahls auf einem Lichtkonversionsmittel, hier "Phosphorelement" genannt, durch Fluoreszenz in im Wesentlichen "weißes" Licht umgewandelt. Das Lichtkonversionsmittel hat meist die Form eines Plättchens, wobei nach dem Auflicht- oder dem Durchlichtprinzip gearbeitet werden kann. Im ersten Fall (Auflicht) wird das konvertierte Licht an derselben Seite abgestrahlt, auf welcher der Laserstrahl auftrifft, im zweiten, hier mehr interessierenden Fall (Durchlicht) wird das konvertierte Licht an jener Seite abgestrahlt, welche der von dem Laser bestrahlten Seite gegenüberliegt. In beiden Fällen kann das genutzte Licht auch aus einer Mischung des z.B. blauen Laserlichtes mit dem konvertierten Licht bestehen, um ein möglichst "weißes" Licht zu erhalten.

Aus dem Dokument DE 20 2015 001682 U1 geht eine Beleuchtungseinrichtung für Kraftfahrzeuge dieser Art hervor, bei welchem auf unterschiedlichen Seiten eines Lichtkonversionselementes, d.h. eines Phosphorelementes, nicht dargestellte Infrarot-Signalgeber bzw. Signalempfänger vorgesehen sind, wobei die entsprechende Messstrahlung bei Beschädigung des Phosphorelements festgestellt und die Laserdiode abgeschaltet werden kann. Weitere Beleuchtungsvorrichtungen für Kraftfahrzeuge, welche Laserlichtquellen aufweisen, sind beispielsweise aus den Dokumenten DE 10 2013 200521 A1, DE 10 2012 220481 A1, DE 10 2012 220472 A1 oder EP 3 037 716 A1 bekannt.

Es ist eine Aufgabe der Erfindung, einen Scheinwerfer zu schaffen, bei welchem bei einem Störfall im Sinne einer teilweisen oder vollständigen Beschädigung des Phosphorelements mit geringem Aufwand Maßnahmen getroffen werden, die von der Laserstrahlung ausgehende Gefährdung zu verhindern bzw. minimal halten.

Diese Aufgabe wird mit einem Scheinwerfer der eingangs genannten Art gelöst, bei welchem erfindungsgemäß in der zumindest einen Vorsatzoptik zumindest ein Umlenkprisma integriert ist, welches im Bereich der bei defektem oder fehlenden Phosphorelement verlaufenden Laserstrahlung liegt, und welches diese im Störfall auftretende Laserstrahlung ablenkt und von der Projektionsoptik und somit von dem Fahrbahnraum fernhält.

Auf diese Weise kann die Sicherheit des Scheinwerfers im Falle einer Beschädigung des Phosphorelements mit bescheidenem Aufwand wirkungsvoll gewährleistet werden.

Bei einer vorteilhaften Weiterbildung der Erfindung ist vorgesehen, dass die optische Achse der Vorsatzoptik von der Richtung des erzeugten Laserstrahls abweicht, und bei defektem oder fehlendem Phosphorelement die Laserstrahlung in zwei Teilstrahlen aufgespalten wird, wobei jedem Teilstrahl ein Umlenkprisma zugeordnet ist. Dadurch ist auch bei dem bewusst in Kauf genommenen Auftreten von zwei störenden Laserstrahlen die gewünschte Sicherheit gewährleistet.

Falls die Lichteintrittsfläche des Umlenkprismas dem Querschnitt des im Störfall auftretenden Laserstrahls angepasst ist, wird auch der Umstand berücksichtigt, dass der Laserstrahl im Allgemeinen nicht kreisrunden Querschnitt aufweist.

Um eine unnötig große Ausbildung eines Umlenkprismas zu vermeiden, ist es vorteilhaft, wenn das zumindest eine Umlenkprisma bezüglich eines im Störfall auftretenden Laserstrahls so ausgerichtet ist, dass dessen Ablenkung parallel zur kürzeren Achse des Strahlquerschnitts erfolgt.

Es ist weiters empfehlenswert, wenn in dem Gehäuse des Scheinwerfers im Auftreffbereich des im Störfall umgelenkten zumindest einen Laserstrahls ein Photodetektor angeordnet ist, der mit einer Detektionseinrichtung verbunden ist, die dazu eingerichtet ist, im Störfall ein Warnsignal abzugeben und/oder die zumindest eine Laserlichtquelle abzuschalten.

Andererseits kann zweckmäßigerweise vorgesehen sein, dass in dem Gehäuse des Scheinwerfers im Auftreffbereich des im Störfall umgelenkten zumindest einen Laserstrahls ein strahlungsabsorbierendes Mittel vorgesehen ist.

Bei einer bezüglich der Lichtleistung und Lichtverteilung zweckmäßigen Ausgestaltung sind zumindest zwei Laser-Lichtmodule vorgesehen, wobei die Lage der optischen Achse der Vorsatzoptik bezüglich der Richtung des erzeugten Laserstrahls bei den Lichtmodulen unterschiedlich ist.

Gleichfalls im Sinne einer optimalen Lichtverteilung kann mit Vorteil vorgesehen sein, dass zumindest zwei Laser-Lichtmodule vorgesehen sind, deren Laserlichtquelle einen Laserstrahl mit elliptischen Strahlquerschnitt erzeugen, wobei die Achsenlage des elliptischen Strahlquerschnitts bezüglich der optischen Hauptachse des Scheinwerfers bei den Lichtmodulen unterschiedlich ist.

Erfindungsgemäß ist die Vorsatzoptik des zumindest einen Laser-Lichtmoduls als TIR-Optik ausgebildet.

Erfindungsgemäß ist das zumindest eine Umlenkprisma durch eine Ausnehmung an der Vorderseite der TIR-Optik gebildet.

Dabei kann es von Vorteil sein, wenn die TIR-Optik als für im Störfall auftretende Laserstrahlung kollimierend ausgebildet ist und ein kollimierter Störstrahl von der Projektionsoptik weggelenkt wird.

Die Erfindung ist im Folgenden anhand beispielsweiser Ausführungsformen anhand der Zeichnung veranschaulicht, in welcher zeigen
Fig.1 schaubildlicher, teilweise geschnittener schematischer Darstellung einen Scheinwerfer unter Weglassung von für die Erfindung nicht wesentlichen Teilen mit drei Laser-Lichtmodulen,
Fig. 2 in stark schematischer Darstellung eine in einem Laser-Lichtmodul verwendete Laserlichtquelle samt einem Phosphorelement,
Fig. 3 das mittlere Laser-Lichtmodul der Fig. 1 in schaubildlicher Darstellung,
Fig. 4 einen Schnitt nach der Ebene IV-IV der Fig. 3,
Fig. 5 einen Schnitt nach der Linie V-V der Fig. 3,
Fig. 6 das rechte Laser-Lichtmodul der Fig. 1 in schaubildlicher Darstellung,
Fig. 7 einen Schnitt nach der Ebene VII-VII der Fig. 6 und
Fig. 8 einen Schnitt nach der Linie VIII-VIII der Fig. 6.

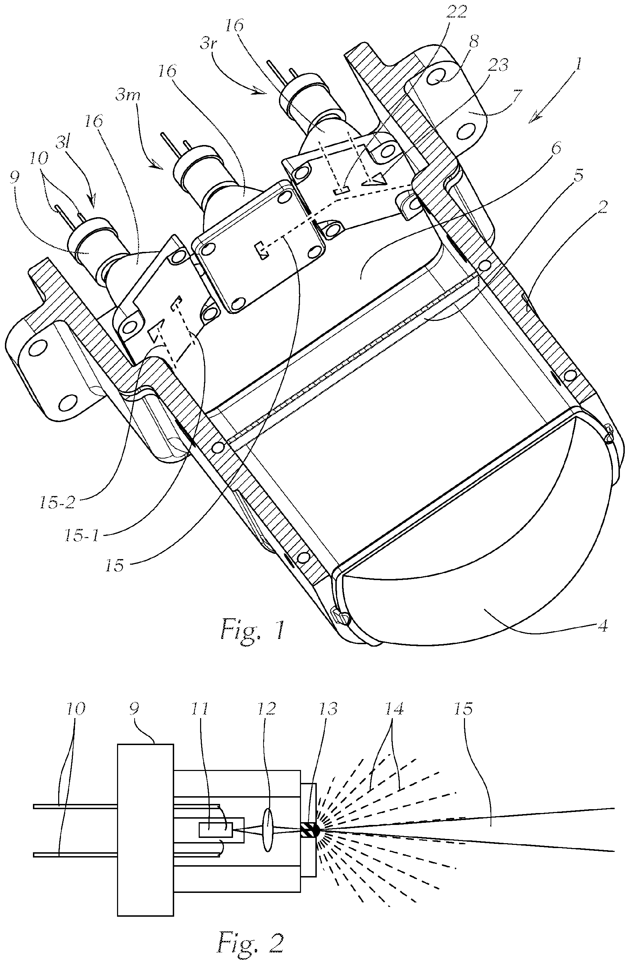

Unter Bezugnahme auf Fig. 1 wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen.

Der gezeigte Scheinwerfer **1** gemäß der Erfindung kann in der beispielsweisen Ausgestaltung zur Erzeugung einer Fernlichtverteilung dienen. Der Scheinwerfer 1 besitzt ein Scheinwerfergehäuse **2,** in dessen hinteren Bereich drei weiter unten näher beschriebene Laser-Lichtmodule **3l, 3m, 3r** angeordnet sind. An seiner Vorderseite ist das Gehäuse 2 durch eine Projektionsoptik **4** abgeschlossen. Zwischen den Lichtmodulen 31, 3m, 3r und der Projektionsoptik 4 liegt im vorliegenden Ausführungsbeispiel eine Blende **5,** welche im Betrieb eine Hell/Dunkelgrenze erzeugt. Außerdem ist im hinteren Bereich des Gehäuses 2 ein als ebenes Blech geformtes strahlenabsorbierendes Mittel **6** angeordnet. In der Zeichnung sind Flansche **7** mit Bohrungen **8** ersichtlich, die zur Befestigung des Scheinwerfers 1 an Karosserieteilen eines Fahrzeugs dienen. An dieser Stelle sei angemerkt, dass der hier dargestellte und beschriebene "Scheinwerfer" auch als Scheinwerfermodul oder als Beleuchtungseinheit dienen kann, das in einem Scheinwerfer sitzt, der mehrere Module aufweist. Der Begriff "Scheinwerfer" ist somit in diesem weiteren Sinn zu verstehen.

Bevor auf weitere, für die Erfindung bedeutsame Merkmale des Scheinwerfers 1 eingegangen wird, sei zunächst an Hand der **Fig. 2** der prinzipielle Aufbau einer Laser-Lichtquelle mit einem Phosphorelement und die mit dieser verbundenen Problematik erläutert.

In einem Gehäuse **9,** aus dem elektrische Anschlüsse **10** herausgeführt sind, ist eine Laserlichtquelle **11** angeordnet, die bevorzugt als Laserdiode ausgebildet ist. Dies soll jedoch andere Bauarten, wie beispielsweise Festkörperlaser, nicht ausschließen. Der Laserlichtquelle 11 ist eine innere Fokussieroptik **12** nachgeordnet, welche den Laserstrahl auf ein am vorderen Ende des Gehäuses angeordnetes Phosphorelement **13** fokussiert. Dieses Phosphorelement 13 kann als Plättchen ausgebildet oder pillenförmig sein und dient dazu, zumindest einen Teil der Laserstrahlung in Licht anderer Wellenlänge umzuwandeln, beispielsweise blaues oder auch ultraviolettes Laserlicht in beispielsweise weißgelbes sichtbares Licht umzuwandeln.

Bei Verwendung "blauer" Laser kommen beispielsweise Halbleiterlaser auf InGaN-Basis bei Wellenlängen von 405 und 450 nm in Frage, im UV-Bereich z.B. 365 bis 375 nm. Der Laserstrahl trifft auf das Phosphorelement 13 und durchsetzt das in oder auf diesem enthaltene Lichtkonversionsmaterial, welches kurz "Phosphor" genannt wird. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist. Man verwendet Lumineszenz-Farbstoffe, wobei die Ausgangswellenlänge im Allgemeinen kürzer und damit energiereicher als das emittierte Wellenlängengemisch ist. Der gewünschte Weißlichteindruck entsteht dabei durch additive Farbmischung. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen beispielsweise Optokeramiken in Frage, das sind transparente Keramiken, wie beispielsweise YAG:Ce (ein Yttrium-Aluminium-Granat mit Cer dotiert). Alternativ können Halbleitermaterialien mit eingebetteten Quantenpunkten genutzt werden.

Nach dem Phosphorelement 13 liegt im Allgemeinen ein über einen großen Raumwinkel ausgestrahltes Mischlicht **14** vor, das aus konvertiertem Licht und gestreuter Laserstrahlung besteht. Bedeutsam ist der Umstand, dass bei fehlendem oder defektem Phosphorelement 13 ein Laserstrahl **15** auftritt, der entsprechend stark gebündelt ist.

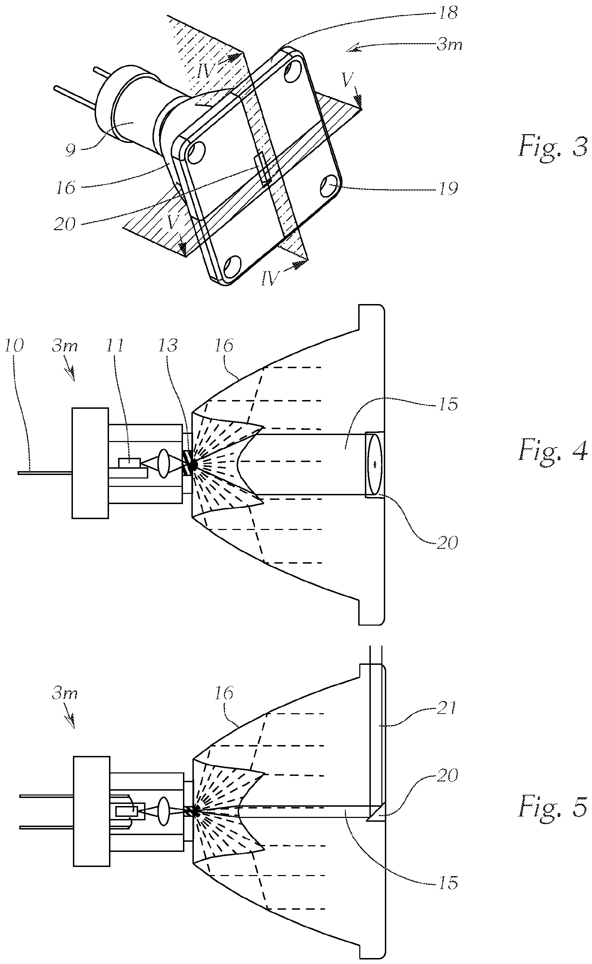

Nun auf die **Fig. 3, 4** und **5** Bezug nehmend erkennt man in genauerer und größerer Darstellung das mittlere Laser-Lichtmodul 3m, welches die zuvor beschriebene Laserlichtquelle 11 mit dem Phosphorelement 13 sowie eine davor sitzende Vorsatzoptik **16** enthält, welche mit dem Gehäuse 9 der Laser-Lichtquelle 11 fest verbunden ist. Erfindungsgemäß ist diese Vorsatzoptik eine TIR-Optik, somit eine Optik mit Totalreflexion, bestehend beispielsweise aus einem glasklaren Kunststoff, Glas oder Silikon. Solche TIR-Optiken (Total Internal Reflection) sind bekannt und werden meist zum Fokussieren des Lichts leistungsstarker LEDs eingesetzt. Die Vorsatzoptik 16 sammelt das von dem Phosphorelement ausgehende Mischlicht 14 (Fig. 2) und strahlt es im Wesentlichen in paralleler Lichtstrahlung **17** nach vorne ab. In Fig. 1 und 3 erkennt man an einem umlaufenden Flansch **18** ausgebildete Bohrungen **19,** welche zur Befestigung des Laser-Lichtmoduls 3m in dem Scheinwerfer 1 durch nicht dargestellte Bolzen oder Schrauben dienen.

Die Projektionsoptik 4 dient nun zum Projizieren der in der Brennebene der Projektionsoptik von den Laser-Lichtmodulen 31, 3m, 3r erzeugten Lichtverteilung in den Fahrbahnraum.

Auf den in Fig. 2 gezeigten, bei fehlendem oder defektem Phosphorelement 13 auftretenden Laserstrahl 15 zurückkommend, ist es klar, dass ein solcher relativ energiereicher Laserstrahl eine potentielle Gefahr für Lebewesen, insbesondere für das Augenlicht von Menschen darstellen kann, da ein solcher Laserstrahl durch die Projektionsoptik 4 den Scheinwerfer 1 verlassen und Schaden anrichten würde. Um dies zu vermeiden, ist vorgesehen, dass in der Vorsatzoptik 16 im vorliegenden Fall ein Umlenkprisma **20** integriert ist, welches im Bereich des bei defektem oder fehlenden Phosphorelement 13 verlaufenden Laserstrahls 15 liegt, und welches diese im Störfall auftretende Laserstrahlung ablenkt und von der Projektionsoptik 4 und somit von dem davor liegenden Fahrbahnraum fernhält. Man kann auch die TIR-Optik 16 als für die im Störfall auftretende Laserstrahlung kollimierend ausbilden, sodass ein kollimierter Störstrahl von der Projektionsoptik 4 weggelenkt wird und weniger oder kaum unkontrollierbare diffuse Laserstrahlung auftritt.

Erfindungsgemäß ist das Umlenkprisma 20 durch eine Ausnehmung an der Vorderseite der TIR-Projektionsoptik gebildet. Wesentlich ist lediglich, dass ein Übergang - hier etwa unter 45° - von dem Material der TIR-Vorsatzoptik 16 zur Luft geschaffen ist, um so eine Totalreflexion zu erreichen. Dabei ist die Lichteintrittsfläche des Umlenkprismas 20 dem Querschnitt des Laserstrahls 15 angepasst und das Umlenkprisma 20 ist bezüglich des im Störfall auftretenden Laserstrahls 15 so ausgerichtet, dass dessen Ablenkung parallel zur kürzeren Achse des Strahlquerschnitts erfolgt. Dies führt zu kleineren Abmessungen des Umlenkprismas, was auch deutlich aus den Fig. 4 und 5 erkennbar ist. In Fig. 4 sieht man nämlich deutlich den elliptischen Querschnitt des im Störfall auftretenden Laserstrahls 15, wozu anzumerken ist, dass ein elliptischer Strahlquerschnitt der Regelfall bei Laserdioden ist. In den Figuren ist der durch Umlenkprismen abgelenkte Laserstrahl mit dem Bezugszeichen **21** bezeichnet. Dieser Laserstrahl 21 kann zweckmäßigerweise zu einem strahlungsabsorbierenden Mittel gelenkt sein, welches die gefährliche Laserstrahlung absorbiert und vernichtet. Ein solches strahlungsabsorbierendes Mittel 6 ist in Fig. 1 gezeigt, auf welches weiter unten näher eingegangen wird. Alternativ oder zusätzlich zu dem strahlungsabsorbierendes Mittel können ein oder mehrere, in der Zeichnung nicht gezeigte Photosensoren vorgesehen sein, welche zumindest einen Teil der in einem Störfall auftretenden Laserstrahlung detektieren und mit einer Detektionseinrichtung verbunden sind, die dazu eingerichtet ist, im Störfall ein Warnsignal abzugeben und/oder die eine Laserlichtquelle abzuschalten.

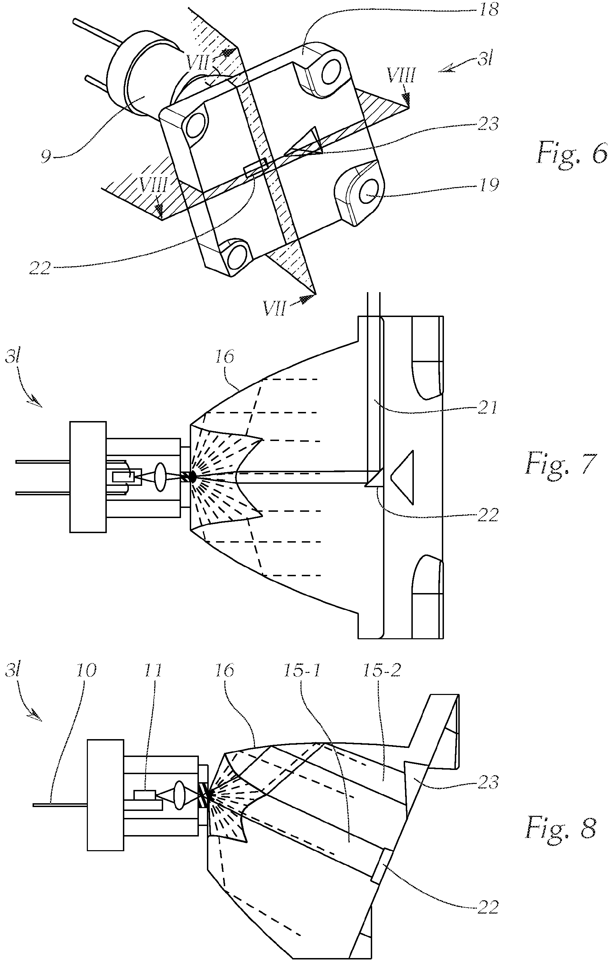

Auf Fig. 1 zurückkommend und unter weiterer Bezugnahme auf die Fig. **6, 7** und **8** erkennt man, dass sowohl bei dem rechten Laser-Lichtmodul 3r als auch bei dem linken Laser-Lichtmodul 31 die optische Achse der Vorsatzoptik 16 gegen die optische Achse der Laserlichtquelle 11 bzw. bezüglich der Richtung des erzeugten Laserstrahls unter einem Winkel von annähernd 30° versetzt ist. In Hinblick auf die erforderliche Befestigung sind die Flanschabschnitte mit den Bohrungen 19 bei den beiden äußeren, d.h. linken und rechten Laser-Lichtmodulen 3l und 3r anders ausgebildet, als bei dem mittleren Laser-Lichtmodul 3m, doch können die Vorsatzoptiken 16 der Laser-Lichtmodule 31, 3r ebenso wie deren Laserlichtquellen 11 links und rechts gleich ausgebildet sein, wodurch Werkzeugkosten gespart werden.

Man erkennt weiters bei Vergleich der Fig. 4 und 5 mit Fig. 7 und 8, dass die optischen Achsen der Laserlichtquellen des mittleren Laser-Lichtmoduls 3m bezüglich des rechten Laser-Lichtmoduls 3r bzw. des linken Laser-Lichtmoduls 31 um 90° gedreht sind. Im vorliegenden Fall besitzt das mittlere Laser-Lichtmodul 3m einen "stehenden" (elliptischen) Strahlquerschnitt, wogegen die beiden äußeren Laser-Lichtmodule 3l und 3m einen "liegenden" (elliptischen) Strahlquerschnitt liefern.

Dank der Verwendung von drei Laser-Lichtmodulen erhält man verständlicherweise die dreifache Lichtleistung - verglichen mit nur einem einzigen Laser-Lichtmodul - und das oben beschriebene Versetzen der Achsen um einen Winkel - hier 30° - sowie das Verdrehen der Strahlquerschnitte - hier um 90° - ergibt eine der Praxis angepasste Fernlichtverteilung. Natürlich kann man einerseits den Scheinwerfer nach der Erfindung auch mit einem oder zwei oder mehr als drei Laser-Lichtmodulen ausstatten bzw. andere Versetzungswinkel und Achsverdrehungen wählen.

In Fig. 1 sowie in den Fig. 6 bis 8 erkennt man, dass die Vorsatzoptiken der äußeren Laser-Lichtmodule 3l, 3r je zwei Umlenkprismen 22 und 23 aufweisen, die außerdem unterschiedlich gestaltet sind. Dies hat seinen Grund in dem Umstand, dass hier die optischen Achsen der Laserlichtquellen zu den optischen Achsen der Vorsatzoptiken versetzt sind und es im Fehlerfall zu einem Aufspalten des störenden Laserstrahls in zwei Teilstrahlen **15-1** und **15-2** kommt, die beide unschädlich gemacht bzw. detektiert werden müssen.

### Liste der Bezugszeichen

- 1: Scheinwerfer
- 2: Scheinwerfergehäuse
- 31: Laser-Lichtmodul, linkes
- 3m: Laser-Lichtmodul, mittleres
- 3r: Laser-Lichtmodul, rechtes
- 4: Projektionsoptik
- 5: Blende
- 6: Mittel, strahlenabsorbierendes
- 7: Flansche
- 8: Bohrungen
- 9: Gehäuse
- 10: Anschlüsse
- 11: Laserlichtquelle
- 12: Fokussieroptik
- 13: Phosphorelement
- 14: Mischlicht
- 15: Laserstrahl
- 15-1: Laserstrahl
- 15-2: Laserstrahl
- 16: Vorsatzoptik
- 17: Lichtstrahlung
- 18: Flansch
- 19: Bohrungen
- 20: Umlenkprisma
- 21: Laserstrahl
- 22: Umlenkprisma
- 23: Umlenkprisma

## Patentansprüche

1. Scheinwerfer (1) für Fahrzeuge mit zumindest einem Laser-Lichtmodul (31, 3m, 3r), welches eine Laserlichtquelle (11) und ein dieser im Strahlengang nachgeordnetes Phosphorelement (13) sowie eine Vorsatzoptik (16) aufweist,
wobei das zumindest eine Laser-Lichtmodul (31, 3m, 3r) in einem Gehäuse (2) des Scheinwerfers (1) angeordnet ist, welcher eine Projektionsoptik (4) zum Projizieren der in der Brennebene der Projektionsoptik (4) des zumindest einen Laser-Lichtmoduls (31, 3m, 3r) erzeugten Lichtverteilung in den Fahrbahnraum besitzt, **dadurch gekennzeichnet, dass**
in der zumindest einen Vorsatzoptik (16) zumindest ein Umlenkprisma (20; 22, 23) integriert ist, welches im Bereich der bei defektem oder fehlenden Phosphorelement (13) verlaufenden Laserstrahlung (15; 15-1, 15-2) liegt, und welches diese im Störfall auftretende Laserstrahlung ablenkt und von der Projektionsoptik (4) und somit von dem Fahrbahnraum fernhält,
wobei die Vorsatzoptik (16) des zumindest einen Laser-Lichtmoduls (31, 3m, 3r) als TIR-Optik ausgebildet ist und das zumindest eine Umlenkprisma (20; 22, 23) durch eine Ausnehmung an der Vorderseite der TIR-Optik (16) gebildet ist.

2. Scheinwerfer (1) nach Anspruch 1, **dadurch gekennzeichnet, dass** die optische Achse der Vorsatzoptik (16) von der Richtung des erzeugten Laserstrahls (15; 15-1, 15-2) abweicht, und bei defektem oder fehlenden Phosphorelement (13) die Laserstrahlung in zwei Teilstrahlen (15-1, 15-2) aufgespalten wird, wobei jedem Teilstrahl ein Umlenkprisma (22, 23) zugeordnet ist.

3. Scheinwerfer (1) nach Anspruch 1 oder 2, **dadurch gekennzeichnet, dass** die Lichteintrittsfläche des Umlenkprismas (20; 22, 23) dem Querschnitt des im Störfall auftretenden Laserstrahls (15; 15-1, 15-2) angepasst ist.

4. Scheinwerfer (1) nach Anspruch 3, **dadurch gekennzeichnet, dass** das zumindest eine Umlenkprisma (20; 22, 23) bezüglich des im Störfall auftretenden Laserstrahls (15; 15-1, 15-2) so ausgerichtet ist, dass dessen Ablenkung parallel zur kürzeren Achse eines elliptischen Strahlquerschnitts erfolgt.

5. Scheinwerfer (1) nach einem der Ansprüche 1 bis 4, **dadurch gekennzeichnet, dass** in dem Gehäuse (2) des Scheinwerfers (1) im Auftreffbereich des im Störfall umgelenkten zumindest einen Laserstrahls (15; 15-1, 15-2) ein Fotosensor angeordnet ist, der mit einer Detektionseinrichtung verbunden ist, die dazu eingerichtet ist, im Störfall ein Warnsignal abzugeben und/oder die zumindest eine Laserlichtquelle (11) abzuschalten.

6. Scheinwerfer (1) nach einem der Ansprüche 1 bis 5, **dadurch gekennzeichnet, dass** in dem Gehäuse (2) des Scheinwerfers (1) im Auftreffbereich des im Störfall umgelenkten zumindest einen Laserstrahls (15; 15-1, 15-2) ein strahlungsabsorbierendes Mittel (6) vorgesehen ist.

7. Scheinwerfer (1) nach einem der Ansprüche 1 bis 6, **dadurch gekennzeichnet, dass** zumindest zwei Laser-Lichtmodule (3l, 3m, 3r) vorgesehen sind, wobei die Lage der optischen Achse der Vorsatzoptik (16) bezüglich der Richtung des erzeugten Laserstrahls (15; 15-1, 15-2) bei den Lichtmodulen unterschiedlich ist.

8. Scheinwerfer (1) nach einem der Ansprüche 1 bis 7, **dadurch gekennzeichnet, dass** zumindest zwei Laser-Lichtmodule (31, 3m, 3r) vorgesehen sind, deren Laserlichtquellen (11) einen Laserstrahl (15; 15-1, 15-2) mit elliptischen Strahlquerschnitt erzeugen, wobei die Achsenlage des elliptischen Strahlquerschnitts bezüglich der optischen Hauptachse des Scheinwerfers (1) bei den Laser-Lichtmodulen (3l, 3m, 3r) unterschiedlich ist.

9. Scheinwerfer (1) nach einem der Ansprüche 1 bis 8, **dadurch gekennzeichnet, dass** die TIR-Optik (16) als für im Störfall auftretende Laserstrahlung kollimierend ausgebildet ist und ein kollimierter Störstrahl von der Projektionsoptik (4) weggelenkt wird.

## Claims

1. Headlamp (1) for vehicles, having at least one laser light module (31, 3m, 3r) which has a laser light source (11) and a phosphor element (13) arranged downstream of the latter in the beam path, as well as an optical attachment (16)
wherein the at least one laser light module (31, 3m, 3r) is arranged in a housing (2) of the headlamp (1), which has projection optics (4) for projecting the light distribution generated in the focal plane of the projection optics (4) of the at least one laser light module (3l, 3m, 3r) into the roadway space, **characterized in that**
at least one deflection prism (20; 22, 23) is integrated in the at least one attachment optics (16), which prism is located in the region of the laser radiation (15; 15-1, 15-2) running when the phosphor element (13) is defective or missing, and which deflects this laser radiation occurring in the event of a fault and keeps it away from the projection optics (4) and thus from the roadway space,
wherein
the attachment optics (16) of the at least one laser light module (31, 3m, 3r) is designed as a TIR optics and the at least one deflection prism (20; 22, 23) is formed by a recess on the front side of the TIR optics (16).

2. Headlamp (1) according to claim 1, **characterized in that** the optical axis of the attachment optics (16) deviates from the direction of the generated laser beam (15; 15-1, 15-2), and in the event of a defective or missing phosphor element (13) the laser beam is split into two partial beams (15-1, 15-2), each partial beam being assigned a deflection prism (22, 23).

3. Headlamp (1) according to claim 1 or 2, **characterized in that** the light entry surface of the deflecting prism (20; 22, 23) is adapted to the cross-section of the laser beam (15; 15-1, 15-2) occurring in the event of a fault.

4. Headlamp (1) according to claim 3, **characterized in that** the at least one deflection prism (20; 22, 23) is aligned with respect to the laser beam (15; 15-1, 15-2) occurring in the event of a malfunction in such a way that its deflection takes place parallel to the shorter axis of an elliptical beam cross-section.

5. Headlamp (1) according to one of claims 1 to 4, **characterized in that** a photosensor is arranged in the housing (2) of the headlamp (1) in the impact region of the at least one laser beam (15; 15-1, 15-2) deflected in the event of a malfunction, which photosensor is connected to a detection device which is set up to emit a warning signal in the event of a malfunction and/or to switch off the at least one laser light source (11).

6. Headlamp (1) according to one of claims 1 to 5, **characterized in that** a radiation-absorbing means (6) is provided in the housing (2) of the headlamp (1) in the impact region of the at least one laser beam (15; 15-1, 15-2) deflected in the event of an incident.

7. Headlamp (1) according to one of claims 1 to 6, **characterized in that** at least two laser light modules (31, 3m, 3r) are provided, the position of the optical axis of the attachment optics (16) with respect to the direction of the generated laser beam (15; 15-1, 15-2) being different for the light modules.

8. Headlamp (1) according to one of claims 1 to 7, **characterized in that** at least two laser light modules (31, 3m, 3r) are provided, the laser light sources (11) of which generate a laser beam (15; 15-1, 15-2) with an elliptical beam cross-section, the axial position of the elliptical beam cross-section with respect to the main optical axis of the headlamp (1) being different in the laser light modules (31, 3m, 3r).

9. Headlamp (1) according to one of claims 1 to 8, **characterized in that** the TIR optics (16) is designed as collimating for laser radiation occurring in the event of interference and a collimated interference beam is deflected away from the projection optics (4).

## Revendications

1. Projecteur (1) pour véhicules avec au moins un module de lumière laser (31, 3m, 3r), qui présente une source de lumière laser (11) et un élément phosphoreux (13) disposé en aval de celle-ci dans le trajet du faisceau ainsi qu'une optique additionnelle (16),
l'au moins un module de lumière laser (31, 3m, 3r) étant disposé dans un bo tier (2) du projecteur (1), lequel possède une optique de projection (4) pour projeter dans l'espace de la chaussée la répartition de la lumière produite dans le plan focal de l'optique de projection (4) de l'au moins un module de lumière laser (31, 3m, 3r), **caractérisé en ce que**
dans l'au moins une optique additionnelle (16) est intégré au moins un prisme de déviation (20 ; 22, 23) qui se trouve dans la zone du rayonnement laser (15 ; 15-1, 15-2) se déplaçant en cas d'élément phosphoreux (13) défectueux ou manquant, et qui dévie ce rayonnement laser apparaissant en cas de panne et le tient éloigné de l'optique de projection (4) et donc de l'espace de la chaussée,
où
l'optique additionnelle (16) de l'au moins un module de lumière laser (31, 3m, 3r) est conçue comme une optique TIR et l'au moins un prisme de déviation (20 ; 22, 23) est formé par un évidement sur la face avant de l'optique TIR (16).

2. Projecteur (1) selon la revendication 1, **caractérisé en ce que** l'axe optique de l'optique additionnelle (16) s'écarte de la direction du faisceau laser (15 ; 15-1, 15-2) généré et, en cas d'élément phosphoreux (13) défectueux ou manquant, le faisceau laser est divisé en deux faisceaux partiels (15-1, 15-2), un prisme de déviation (22, 23) étant associé à chaque faisceau partiel.

3. Projecteur (1) selon la revendication 1 ou 2, **caractérisé en ce que** la surface d'entrée de lumière du prisme de déviation (20 ; 22, 23) est adaptée à la section transversale du faisceau laser (15 ; 15-1, 15-2) apparaissant en cas de panne.

4. Projecteur (1) selon la revendication 3, **caractérisé en ce que** l'au moins un prisme de déviation (20 ; 22, 23) est orienté par rapport au faisceau laser (15 ; 15-1, 15-2) apparaissant en cas de perturbation de telle sorte que sa déviation s'effectue parallèlement au plus petit axe d'une section transversale de faisceau elliptique.

5. Projecteur (1) selon l'une des revendications 1 à 4, **caractérisé en ce que** dans le boîtier (2) du projecteur (1), dans la zone d'impact d'au moins un faisceau laser (15 ; 15-1, 15-2) dévié en cas de panne, est disposé un photocapteur qui est relié à un dispositif de détection qui est conçu pour émettre un signal d'avertissement en cas de panne et/ou pour éteindre au moins une source lumineuse laser (11).

6. Projecteur (1) selon l'une des revendications 1 à 5, **caractérisé en ce qu'**un moyen d'absorption de rayonnement (6) est prévu dans le boîtier (2) du projecteur (1) dans la zone d'impact d'au moins un faisceau laser (15 ; 15-1, 15-2) dévié en cas de panne.

7. Projecteur (1) selon l'une des revendications 1 à 6, **caractérisé en ce qu'**il est prévu au moins deux modules de lumière laser (31, 3m, 3r), la position de l'axe optique de l'optique rapportée (16) par rapport à la direction du faisceau laser généré (15 ; 15-1, 15-2) étant différente pour les modules de lumière.

8. Projecteur (1) selon l'une des revendications 1 à 7, **caractérisé en ce qu'**il est prévu au moins deux modules de lumière laser (31, 3m, 3r) dont les sources de lumière laser (11) génèrent un faisceau laser (15 ; 15-1, 15-2) avec une section transversale de faisceau elliptique, la position axiale de la section transversale de faisceau elliptique par rapport à l'axe optique principal du projecteur (1) étant différente pour les modules de lumière laser (31, 3m, 3r).

9. Projecteur (1) selon l'une des revendications 1 à 8, **caractérisé en ce que** l'optique TIR (16) est conçue pour collimater un rayonnement laser se produisant en cas de perturbation et **en ce qu'**un faisceau de perturbation collimaté est dévié par l'optique de projection (4).
